# EUROPEAN PATENT APPLICATION

(11) **EP 4 722 734 A1**
(43) Date of publication of application: **08.04.2026**
(21) Application number: 24819057.1
(22) Date of filing: 25.04.2024
(51) Int. Cl.: G01N 35/10, G01N 35/08

(54) **AUTOMATIC ANALYSIS DEVICE**

(30) Priority: 05.06.2023 JP 2023092515
(71) Applicant: HITACHI HIGH-TECH CORPORATION, Tokyo 105-6409 (JP)
(72) Inventor: YASUKAGAWA Mami, Tokyo 105-6409 (JP); UMEKI Hiroya, Tokyo 105-6409 (JP)
(74) Representative: Strehl & Partner mbB
(86) International application number: PCT/JP2024/016305
(87) International publication number: WO 2024/252820

(57) **Abstract**

[Problem]

To provide an automatic analyzer capable of more precisely detecting deficiency and excess of liquid within a reaction container.

[Solution]

An automatic analyzer, comprises: a nozzle that is immersed in a liquid stored in a container and that aspirates the liquid; a detection unit that detects inflow of the air into the nozzle when aspirating liquid stored in the container: and a control unit that controls each operation of insertion of the nozzle into the container, immersion of the nozzle into the liquid, aspiration of the liquid by the nozzle, and detection of the air by the detection unit, In the automatic analyzer, the control unit inserts the nozzle into the container to a position where a distal end of the nozzle is exposed from the liquid when the nozzle is immersed in the liquid of the container and aspirates the liquid of an amount required for an analysis.

## Description

### Technical Field

The present invention relates to an automatic analyzer.

### Background Art

An automatic analyzer causes blood, urine, or another biological sample (sample) to react with a reagent that specifically reacts with a measurement target component in the sample, and quantitatively detects a complex generated by this reaction, thereby automatically measuring the measurement target component and outputting the result. For example, in an automatic analyzer that performs an immunoassay, predetermined amounts of a sample and a reagent are dispensed into a reaction container by a dispensing nozzle, the mixed reaction liquid in the reaction container is aspirated by a nozzle and introduced into a detection unit, and a target component is detected by a technique such as electrochemiluminescence.

In such an automatic analyzer, when the sample and the reagent are not mixed at a predetermined concentration due to a dispensing abnormality or the like, resulting in deficiency and excess of the liquid amount in the reaction container, it may be difficult to acquire an accurate analysis result. As a technique related to an automatic analyzer for detecting the appropriateness of a liquid amount in a reaction container, for example, a technique described in PTL 1 is known. PTL 1 discloses a liquid amount measurement method involving a reaction container that dispenses a liquid, a syringe that aspirates the liquid, a flow path connected to the syringe, a nozzle connected to the flow path, a nozzle holding mechanism that moves the nozzle in the reaction container, and a control unit that controls operations of the syringe and the nozzle holding mechanism, in which a liquid amount of the liquid dispensed into the reaction container is measured by comparing a transit time of the liquid passing through a fixed point in the flow path from a leading edge to a terminal edge with a predicted time calculated in advance when the liquid dispensed into the reaction container is aspirated by the syringe.

### Citation List

### Patent Literature

PTL 1: JP2004-333439A

### Summary of Invention

### Technical Problem

However, in the related art, since it is assumed that the nozzle is inserted to the vicinity of the bottom of the reaction container and almost the entire amount of the liquid stored in the reaction container is fed, it is not possible to detect the liquid amount deficiency unless the amount of the liquid in the reaction container is significantly small.

The invention has been made in view of the above, and an object thereof is to provide an automatic analyzer capable of more precisely detecting deficiency and excess of a liquid within a reaction container.

### Solution to Problem

The present application includes a plurality of sections for solving the above problem, and one example thereof includes: a nozzle that is immersed in a liquid stored in a container and that aspirates the liquid; a detection unit that detects inflow of the air into the nozzle when aspirating liquid stored in the container; and a control unit that controls each operation of insertion of the nozzle into the container, immersion of the nozzle into the liquid, aspiration of the liquid by the nozzle, and detection of the air by the detection unit, in which the control unit inserts the nozzle into the container to a position where a distal end of the nozzle is exposed from the liquid when the nozzle is immersed in the liquid of the container and aspirates the liquid of an amount required for an analysis.

### Advantageous Effects of Invention

According to the invention, the deficiency and excess of the liquid in the reaction container can be detected more precisely.

### Brief Description of Drawings

[FIG. 1] FIG. 1 is a drawing schematically illustrating an overall configuration of an automatic analyzer.
[FIG. 2] FIG. 2 is a drawing extracting and schematically illustrating a configuration of an immunity detection mechanism.
[FIG. 3] FIG. 3 is a flowchart illustrating a content of a liquid amount determination process.
[FIG. 4] FIG. 4 is a drawing illustrating a positional relationship between a reaction liquid amount within a reaction container and a nozzle in a case of a normal liquid amount.
[FIG. 5] FIG. 5 is a drawing illustrating a status of a detection unit in a case of a normal liquid amount.
[FIG. 6] FIG. 6 is a drawing illustrating a status of a detection unit in a case of a normal liquid amount.
[FIG. 7] FIG. 7 is a drawing illustrating a positional relationship between a reaction liquid amount within a reaction container and a nozzle in a case of liquid amount deficiency.
[FIG. 8] FIG. 8 is a drawing illustrating a status of a detection unit in a case of liquid amount deficiency.
[FIG. 9] FIG. 9 is a drawing illustrating a positional relationship between a reaction liquid amount within a reaction container and a nozzle in a case of an excess liquid amount.
[FIG. 10] FIG. 10 is a drawing illustrating a status of a detection unit in a case of an excess liquid amount.
[FIG. 11] FIG. 11 is a drawing comparatively illustrating a detection status of the air at the detection unit in each case of a normal liquid amount, liquid amount deficiency, and an excess liquid amount.

### Description of Embodiments

Hereinafter, an embodiment according to the invention will be described with reference to the drawings. In the present embodiment, an automatic analyzer that performs an immunoassay will be described as an example, but the invention is not limited thereto, and can also be applied to other automatic analyzers that aspirate a solution and an air segment in a predetermined container from a nozzle and feed the solution and the air segment.

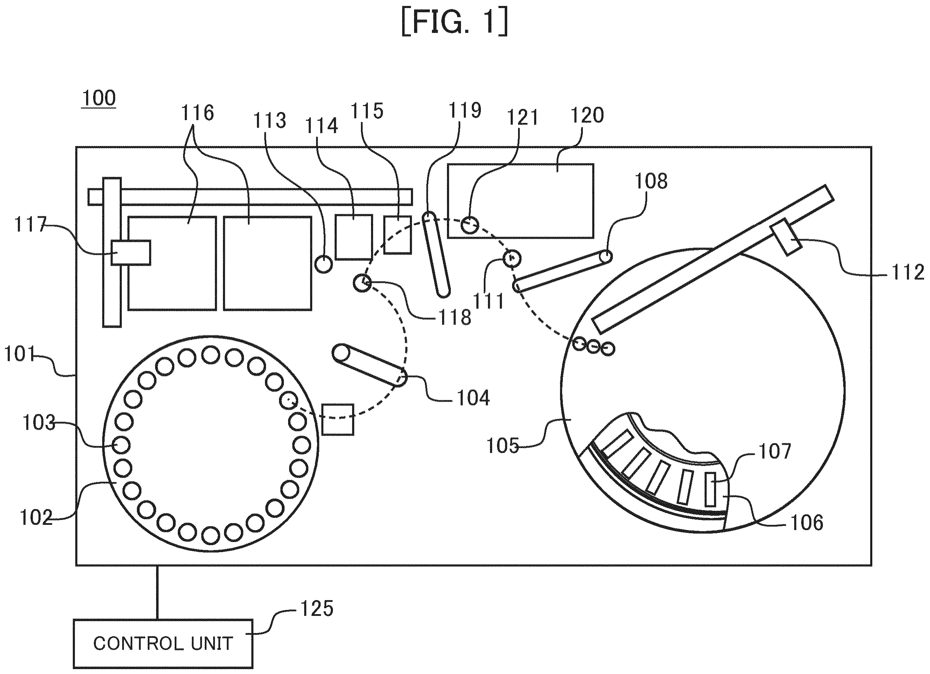

FIG. 1 is a drawing schematically illustrating an overall configuration of an automatic analyzer according to the present embodiment.

In FIG. 1, the automatic analyzer 100 is schematically implemented by an analysis unit 101 including a sample disk 102, a sample dispensing mechanism 104, a reagent storage 105, a reagent disk 106, a reagent dispensing mechanism 108, an incubator disk 110, a magnetic particle mixing arm 112, a reaction container disposal port 113, an incubator block 114, a reaction liquid stirring mechanism 115, reaction container trays 116, a first reaction container transportation mechanism 117, a second reaction container transportation mechanism 119, an immunity detection mechanism 120, and the like, and a control unit 125.

The control unit 125 controls the entire operation of the automatic analyzer 100, and is implemented by, for example, a hardware substrate and a computer, and is connected to a storage device such as a hard disk.

A plurality of sample containers 103 are annularly installed on the sample disk 102. During sample dispensing, the disk rotates clockwise and counterclockwise to transport the sample container 103 to an access position of the sample dispensing mechanism 104.

For example, a barcode for identification is attached to the sample container 103 for the purpose of simplifying sample management. In the barcode, information regarding a sample ID and a sample type is written. The barcode attached to the sample container 103 is read by a barcode reader.

The sample dispensing mechanism 104 includes a rotation drive mechanism, a vertical drive mechanism, and a dispensing nozzle. The dispensing nozzle of the sample dispensing mechanism 104 is moved between the sample aspiration position and a sample discharging position 118 by the rotation drive mechanism and the vertical drive mechanism.

The reagent storage 105 includes the reagent disk 106 having a plurality of reagent container holding units 107 arranged annularly. The reagent storage 105 has a thermal insulation function for improving on-board stability of reagent properties. The plurality of reagent container holding units 107 on the reagent disk 106 each hold a reagent container storing a reagent used for analysis. The reagent disk 106 has a rotation drive mechanism, and moves each reagent container to a predetermined position on a circumference by a rotation motion.

The reagent dispensing mechanism 108 includes a rotation drive mechanism, a vertical drive mechanism, and a dispensing nozzle. The dispensing nozzle of the reagent dispensing mechanism 108 rotates and is lowered to a position of a predetermined type of reagent container on the reagent disk 106, aspirates a predetermined amount of reagent, then is raised, then rotates and is lowered to a reagent discharging position 111, and discharges the reagent to a reaction container installed at the reagent discharging position 111.

The magnetic particle mixing arm 112 (also referred to as a stirrer) having a magnetic particle mixing element as a mixing section is set on the reagent disk 106. The magnetic particle mixing arm 112 moves to an upper region of a reagent container containing a magnetic particle solution to be mixed, lowers the magnetic particle mixing element, and rotates the magnetic particle mixing element to mix the magnetic particle solution. In order to prevent magnetic particles in the magnetic particle solution from naturally precipitating, the magnetic particle mixing arm 112 mixes the magnetic particle solution immediately before a reagent is dispensed.

In an immunoassay process performed by the automatic analyzer 100, a sample dispensing process, a reagent dispensing process, a reaction process, and a detection process are performed in this order.

The first reaction container transportation mechanism 117 has drive mechanisms in an X-axis direction, a Y-axis direction, and a Z-axis direction, and moves above the reaction container disposal port 113, the incubator block 114, the reaction liquid stirring mechanism 115, and the reaction container tray 116.

In the sample dispensing process, the first reaction container transportation mechanism 117 moves a reaction container from the reaction container tray 116 to the sample discharging position 118. The sample dispensing mechanism 104 dispenses a predetermined amount of sample into the reaction container installed at the sample discharging position 118. Thereafter, the reaction container to which the sample is discharged is moved to the reagent discharging position 111 by the second reaction container transportation mechanism 119. The second reaction container transportation mechanism 119 has a rotation drive mechanism, a vertical drive mechanism, and a reaction container gripping mechanism, and has a function of moving the reaction container to each installation position (reagent discharging position 111, incubator block 114, reaction liquid stirring mechanism 115, sample discharging position 118, reaction liquid aspirating position 121, and the like) of the reaction container provided on a rotation track.

In the reagent dispensing process, the reagent dispensing mechanism 108 dispenses a predetermined amount of reagent into the reaction container installed at the reagent discharging position 111. Next, the reaction container is moved to the reaction liquid stirring mechanism 115 by the second reaction container transportation mechanism 119. After the reaction liquid is stirred, the reaction container is moved to the incubator block 114 by the first reaction container transportation mechanism 117.

In the reaction process, the reaction process is performed in the incubator block 114 whose temperature is adjusted to an appropriate temperature for the purpose of promoting the reaction of the sample and the reagent. When the reaction process of the sample and the reagent on the incubator block 114 is completed, the reaction container is moved to the sample discharging position 118 by the first reaction container transportation mechanism 117. Thereafter, the reaction container is moved to a reaction liquid aspirating position 121 provided below the immunity detection mechanism 120 by the second reaction container transportation mechanism 119.

In the detection process, the reaction liquid is aspirated into a detection unit in the immunity detection mechanism 120, and measurement is performed. After the measurement, the reaction container is moved to the sample discharging position 118 by the second reaction container transportation mechanism 119, and then discarded into the reaction container disposal port 113 by the first reaction container transportation mechanism 117.

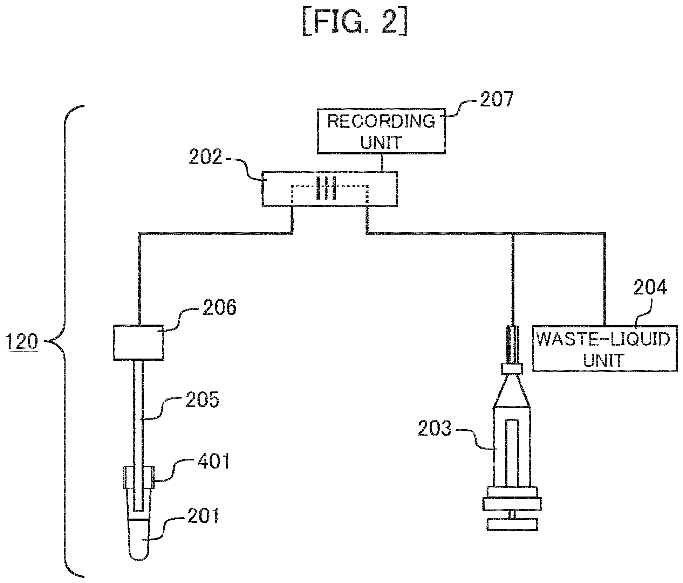

FIG. 2 is a drawing extracting and schematically illustrating a configuration of the immunity detection mechanism.

In FIG. 2, the immunity detection mechanism 120 includes a dispensing mechanism including a nozzle 205 and a vertical drive mechanism 206, a detection unit 202, a syringe 203, and a waste-liquid unit 204.

The dispensing mechanism is for feeding a reaction liquid 201 stored in a reaction container 401 to the detection unit 202, and includes the nozzle 205 inserted into the reaction container 401, and the vertical drive mechanism 206 capable of moving the nozzle 205 to a predetermined height (for example, a predetermined height from a bottom surface of the reaction container 401). As will be described in detail later, the nozzle 205 is inserted into the reaction container 401 to a predetermined height, that is, is inserted to a position where a distal end of the nozzle 205 is just exposed from the reaction liquid 201 when the nozzle 205 is immersed in the reaction liquid 201 of the reaction container 401 and aspirates the liquid of an amount required for an analysis.

The syringe 203 is connected to the nozzle 205 via a liquid feeding path (pipe line), and the detection unit 202 is disposed on the pipe line. When the syringe 203 extends in a state in which the nozzle 205 is immersed in the reaction liquid 201 which is a liquid stored in the reaction container 401, the reaction liquid 201 is aspirated by the nozzle 205, and the reaction liquid 201 is fed to the detection unit 202. In addition, the syringe 203 is connected to the waste-liquid unit 204 via a liquid feeding path (pipe line) separately from the detection unit 202, and in a state in which the reaction liquid 201 is aspirated, the connection of the liquid feeding path is switched to a waste-liquid unit 204 side by an opening and closing operation of a valve or the like (not illustrated), and as the syringe 203 retracts, the reaction liquid 201 is fed to the waste-liquid unit 204.

The detection unit 202 is a flow cell that converts a detection target substance in the reaction liquid 201 into a detectable signal (reaction signal) by an electrochemical reaction. The flow cell includes a plurality of electrodes such as a working electrode, a reference electrode, and a counter electrode, and a recording unit 207 that records an inter-electrode voltage. The recording unit 207 records time series data of the inter-electrode voltage. When the reaction liquid 201 passes over the electrodes in the flow cell, an inter-electrode voltage value changes depending on a concentration of a detection target component in the reaction liquid 201. The detection target component in the reaction liquid 201 can be detected by the voltage value. In addition, when air passes over the electrodes in the flow cell, the inter-electrode voltage value significantly fluctuates as compared with the case in which the reaction liquid 201 passes. By capturing this fluctuation, it is possible to detect the inflow of air into the flow cell.

The insertion operation of the nozzle 205 into the reaction container 401, the immersion operation in the reaction liquid 201 (liquid), the aspiration operation of the reaction liquid 201 (liquid) by the nozzle 205, and the detection operation of the detection target component and the air by the detection unit 202 are controlled by the control unit 125.

In the immunity detection mechanism 120 of the automatic analyzer 100 according to the present embodiment implemented as described above, a liquid amount determination process of detecting liquid amount deficiency and an excess liquid amount of the reaction liquid 201 stored in the reaction container 401 is performed.

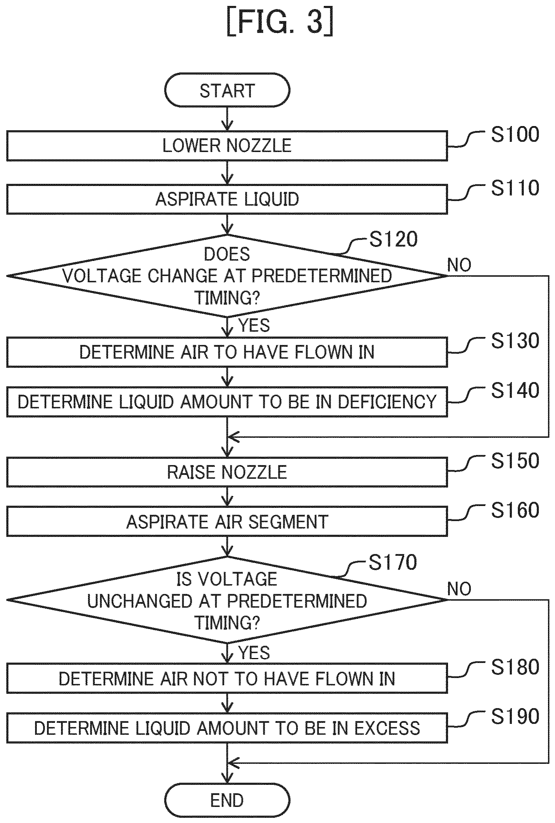

FIG. 3 is a flowchart illustrating a content of the liquid amount determination process.

In FIG. 3, the immunity detection mechanism 120 first lowers the nozzle 205 to a predetermined height from the bottom of the reaction container 401 and inserts the nozzle 205 into the reaction container 401 (Step S100).

Subsequently, the liquid (reaction liquid 201) in the reaction container 401 is aspirated by the nozzle 205 (step S110).

Subsequently, the detection unit 202 determines whether there is a change in voltage indicating the aspiration of air at a predetermined timing (until a predetermined time) from the start of the aspiration of the reaction liquid 201 by the nozzle 205 (step S120), and when the determination result is YES, it is determined that air flows in (step S130), and as a result, the liquid amount is determined to be in deficiency (step S140).

When the determination result in step S120 is NO, or when the process of step S140 is completed, the nozzle 205 is subsequently raised to a predetermined height from the bottom of the reaction container 401 (step S150).

Subsequently, the nozzle 205 aspirates an air segment (step S160).

Subsequently, the detection unit 202 determines whether the voltage indicating the aspiration of the air is unchanged at a predetermined timing (until a predetermined time) from the start of the aspiration of the air segment by the nozzle 205 (step S170), and when the determination result is YES, it is determined that there is no air flow in (step S180), and as a result, the liquid amount is determined to be in excess (step S190), and the process ends.

If the determination result in step S170 is NO, the process ends.

In the liquid amount determination process, when neither the liquid amount deficiency (step S140) nor the excess liquid amount (step S190) is detected, it is determined that the liquid amount is normal. Further, when both the liquid amount deficiency (step S140) and the excess liquid amount (step S190) are detected, another abnormality of the reaction liquid amount different from the deficiency and excess is suspected. As an example of another abnormality, it is conceivable that a leak occurs in the flow path from the nozzle 205 to the detection unit 202 and air flows in at an unintended timing.

Here, a basic principle of the liquid amount determination process will be described by exemplifying each case of the normal liquid amount, the liquid amount deficiency, and the excess liquid amount of the reaction liquid 201 in the reaction container 401.

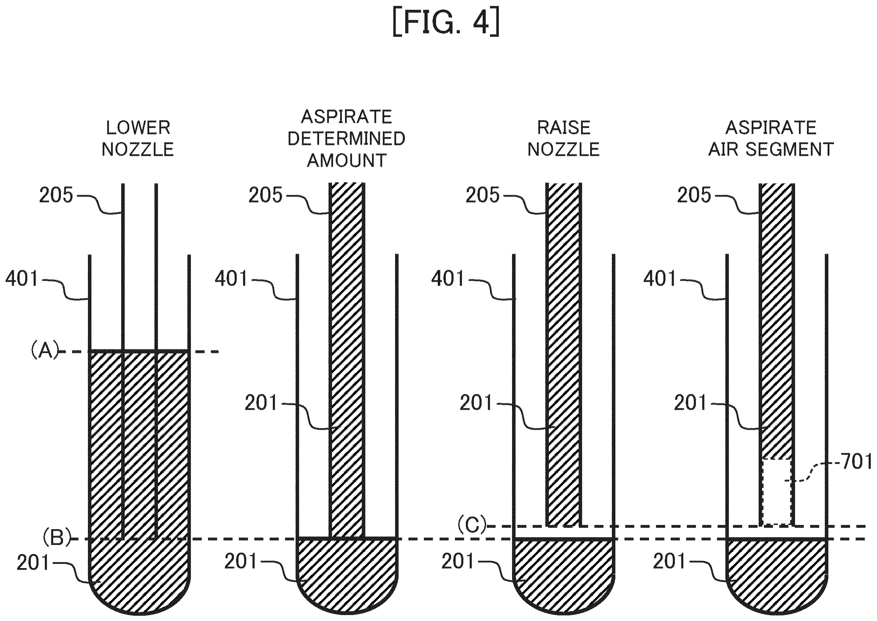

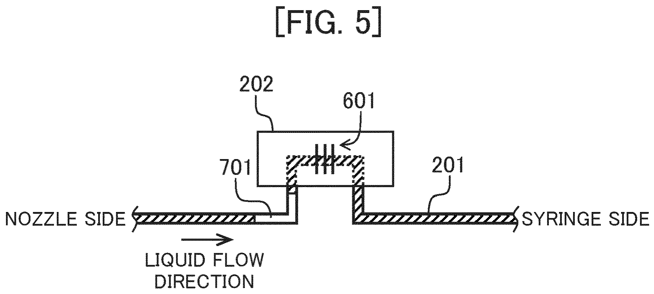

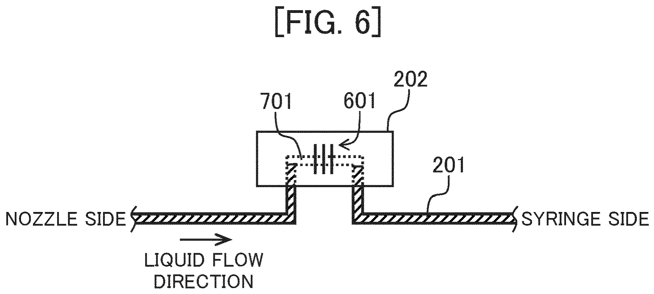

FIG. 4 is a drawing illustrating a positional relationship between the reaction liquid amount within the reaction container and the nozzle in the case of a normal liquid amount. FIGS. 5 and 6 are diagrams each illustrating a state of the detection unit in the case of the normal liquid amount.

As illustrated in FIG. 4, in the case of the normal liquid amount, a liquid level of the reaction liquid 201 stored in the reaction container 401 is at a position (A). In this state, the nozzle 205 is lowered to a predetermined position (B), that is, a predetermined height from the bottom of the reaction container 401 (step S100 in FIG. 3). Here, the predetermined position (B) is a position where the distal end of the nozzle 205 is just exposed from the reaction liquid 201 when the nozzle 205 is immersed in the reaction liquid 201 of the reaction container 401 and aspirates the liquid of an amount required for an analysis (specified amount).

Next, the reaction liquid 201 is aspirated by the nozzle 205 (step S110 in FIG. 3). After the aspiration, the distal end of the nozzle 205 is just exposed from the reaction liquid 201. At this time, as illustrated in FIG. 5, only the reaction liquid 201 passes over an electrode 601 in the flow cell of the detection unit 202 at a predetermined timing (until air segment 701 reaches after the specified amount of the reaction liquid 201 is fed). Therefore, if the liquid amount is normal, no voltage change occurs due to the inflow of air (NO in step S120 in FIG. 3).

Next, in order to aspirate the air segment 701, the nozzle 205 is raised by a predetermined amount (step S150 in FIG. 3). At this time, the nozzle 205 is raised to a position (C) where the distal end of the nozzle 205 is not immersed in the reaction liquid. The position (C) may be determined according to a required accuracy of the amount of reaction liquid 201 produced (in other words, a required accuracy of the liquid amount determination process), and the higher the required accuracy, the closer position (C) is set to the position (B).

Next, the air segment 701 is aspirated (step S160 in FIG. 3). At this time, as illustrated in FIG. 6, the air segment passes over the electrode 601 in the flow cell of the detection unit 202 at a predetermined timing (a time when the specified amount of the reaction liquid 201 is fed and the air segment 701 reaches). Therefore, if the liquid amount is normal, a voltage change due to the air segment occurs (NO in step S170 in FIG. 3).

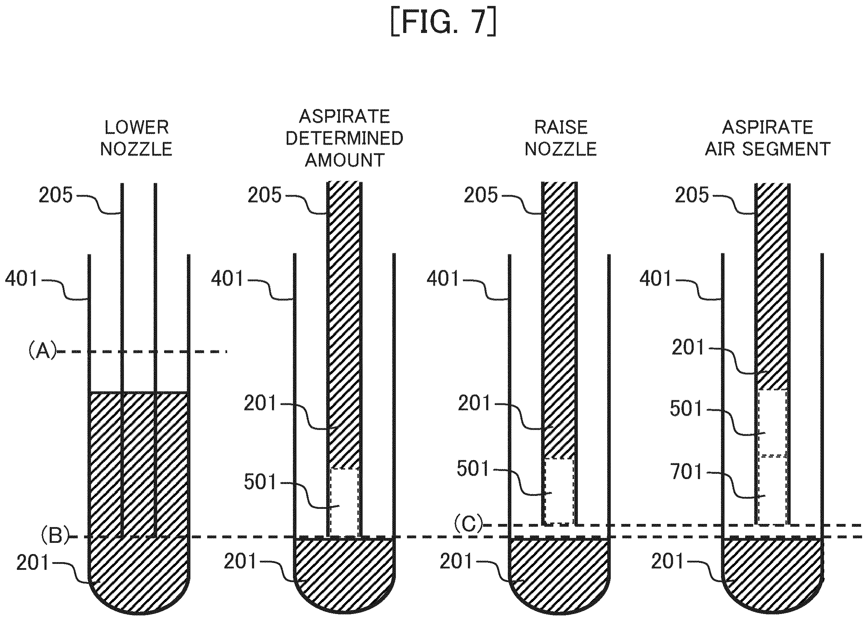

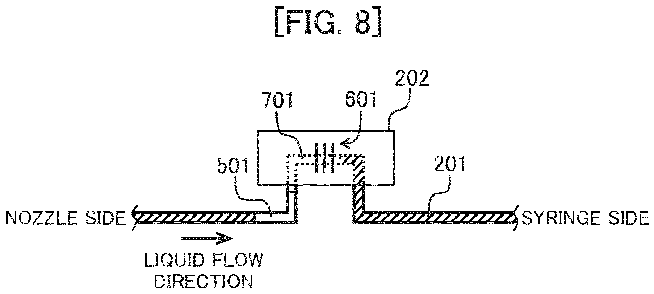

FIG. 7 is a drawing illustrating a positional relationship between the reaction liquid amount within the reaction container and the nozzle in the case of liquid amount deficiency. FIG. 8 is a drawing illustrating a status of the detection unit in the case of liquid amount deficiency.

As illustrated in FIG. 7, in the case of liquid amount deficiency, the liquid level of the reaction liquid 201 stored in the reaction container 401 is lower than the position (A) in the case of the normal liquid amount. In this state, the nozzle 205 is lowered to the predetermined position (B), that is, lowered to the predetermined height from the bottom of the reaction container 401 (step S100 in FIG. 3).

Next, the reaction liquid 201 is aspirated by the nozzle 205 (step S110 in FIG. 3). After the aspiration, the distal end of the nozzle 205 is completely exposed from the reaction liquid 201, and air 501 other than the air segment is aspirated into the nozzle 205. At this time, as illustrated in FIG. 8, the air 501 passes over the electrode 601 in the flow cell of the detection unit 202 at a predetermined timing (until the air segment 701 reaches after the specified amount of the reaction liquid 201 is fed). Therefore, in the case of liquid amount deficiency, a voltage change occurs due to the inflow of the air 501 (YES in step S120 in FIG. 3).

Next, in order to aspirate the air segment 701, the nozzle 205 is raised by a predetermined amount (step S150 in FIG. 3). At this time, the distal end of the nozzle 205 is raised to the position (C).

Next, the air segment 701 is aspirated (step S160 in FIG. 3). At this time, as illustrated in FIG. 8, the air 501 other than the air segment 701 is aspirated into the nozzle 205. Therefore, if the liquid amount is in deficiency, the voltage change due to the air 501 occurs before the voltage change due to the air segment 701 (YES in step S120 in FIG. 3).

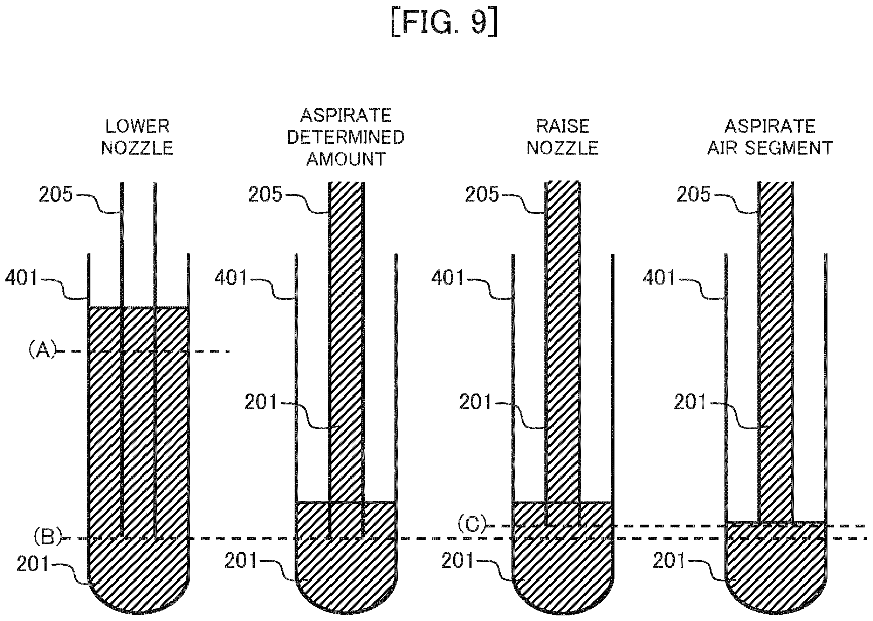

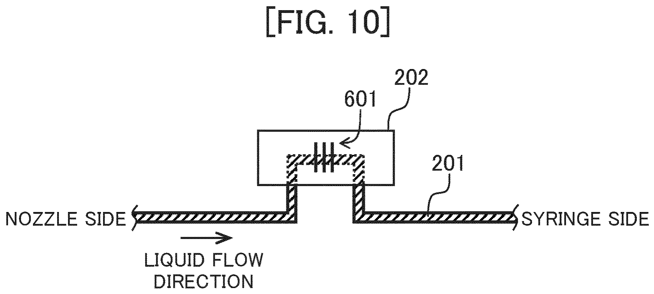

FIG. 9 is a drawing illustrating a positional relationship between the reaction liquid amount within the reaction container and the nozzle in the case of the excess liquid amount. FIG. 10 is a drawing illustrating a status of the detection unit in the case of the excess liquid amount.

As illustrated in FIG. 9, in the case of the excess liquid amount, the liquid level of the reaction liquid 201 stored in the reaction container 401 is above the position (A) in the case of the normal liquid amount. In this state, the nozzle 205 is lowered to a predetermined position (B), that is, the predetermined height from the bottom of the reaction container 401 (step S100 in FIG. 3).

Next, the reaction liquid 201 is aspirated by the nozzle 205 (step S110 in FIG. 3). After the aspiration, the distal end of the nozzle 205 is immersed in the reaction liquid 201. At this time, as illustrated in FIG. 10, only the reaction liquid 201 passes over the electrode 601 in the flow cell of the detection unit 202 at a predetermined timing (until the air segment 701 reaches after the specified amount of the reaction liquid 201 is fed). Therefore, even if the liquid amount is excessive, a voltage change due to inflow of air does not occur (NO in step S120 in FIG. 3).

Next, in order to aspirate the air segment 701, the nozzle 205 is raised by a predetermined amount (step S150 in FIG. 3). At this time, the distal end of the nozzle 205 is raised to the position (C), but the distal end of the nozzle 205 is immersed in the reaction liquid 201.

Next, the air segment 701 is aspirated (step S160 in FIG. 3). At this time, as illustrated in FIG. 10, since the air segment is not aspirated (in other words, the reaction liquid 201 is aspirated), the air segment does not pass over the electrode 601 in the flow cell of the detection unit 202 at the predetermined timing (the time when the specified amount of the reaction liquid 201 is fed and the air segment 701 reaches). Therefore, if the liquid amount is excessive, the voltage change due to the air segment does not occur (YES in step S170 in FIG. 3).

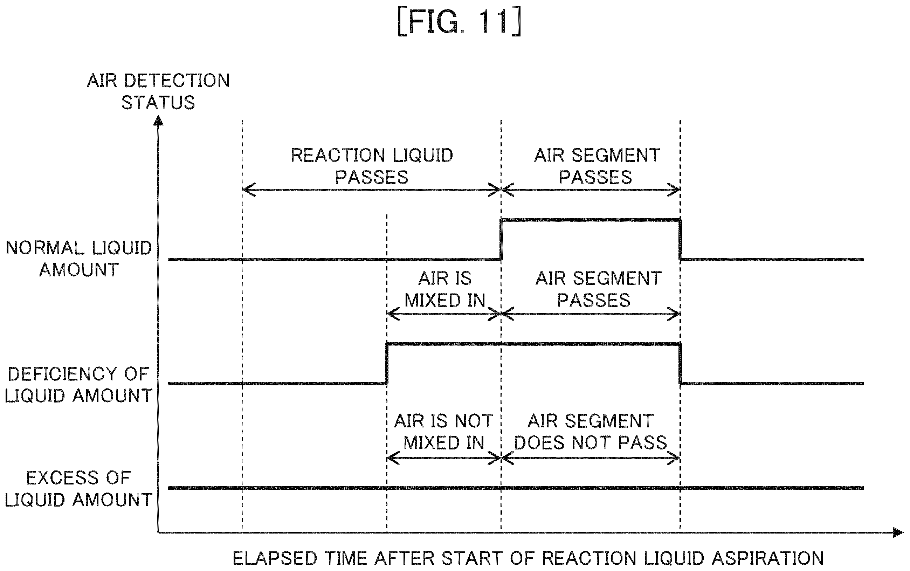

FIG. 11 is a drawing comparatively illustrating a detection status of the air at the detection unit in each case of the normal liquid amount, the liquid amount deficiency, and the excess liquid amount.

As illustrated in FIG. 11, in the case of the normal liquid amount, since the liquid surface position of the reaction liquid and the distal end position of the nozzle coincide with each other when the specified amount of the reaction liquid is aspirated (see FIGS. 4, 5, and 6), the air is not detected while the reaction liquid passes. Air is detected only at the time of passage of the air segment after passage of the specified amount of the reaction liquid. In the case of such an air detection status, the liquid amount can be determined to be normal.

Meanwhile, in the case of the liquid amount deficiency, the liquid surface position of the reaction liquid drops to the distal end position of the nozzle before the specified amount of the reaction liquid is aspirated, and air other than the air segment is mixed (see FIGS. 7 and 8), so that air other than the air segment is mixed before the specified amount of the reaction liquid passes, and the air is detected. In the case of such an air detection status, the liquid amount can be determined to be in deficiency.

In addition, in the case of the excess liquid amount, the liquid surface position of the reaction liquid stops above the distal end position of the nozzle even when the specified amount of the reaction liquid is aspirated, and the air segment cannot be aspirated even by raising the nozzle (see FIGS. 9 and 10), and thus the air including the air segment is not mixed even after the specified amount of the reaction liquid passes, and the air is not detected. In the case of such an air detection status, the liquid amount can be determined to be in excess.

Effects of the present embodiment having the configuration described above will be described.

In the related art in which it is assumed that the nozzle is inserted to the vicinity of the bottom of the reaction container and almost the entire amount of the liquid stored in the reaction container is fed, it is not possible to detect the liquid amount deficiency unless the amount of the liquid in the reaction container is significantly small.

With respect to this, the present embodiment includes the nozzle 205 that is immersed in a liquid (for example, the reaction liquid 201) stored in a container (for example, the reaction container 401) and that aspirates the liquid; the detection unit 202 that detects inflow of the air into the nozzle when aspirating liquid stored in the container; and the control unit 125 that controls each operation of insertion of the nozzle into the container, immersion of the nozzle into the liquid, aspiration of the liquid by the nozzle, and detection of the air by the detection unit, in which the control unit inserts the nozzle into the container to a position where a distal end of the nozzle is exposed from the liquid when the nozzle is immersed in the liquid of the container and aspirates the liquid of an amount required for an analysis. Accordingly, it is possible to more precisely detect the deficiency and excess of the liquid in the reaction container based on the difference in the air detection status, such as the detection of the air (air segment) detected at the specified timing in the case of the normal liquid amount at a timing other than the specified timing in the case of the liquid amount deficiency or the non-detection at the specified timing in the case of the excess liquid amount.

### <Appendix>

The invention is not limited to the embodiment described above and includes various modifications and combinations without departing from the gist of the invention. The invention is not limited to having all configurations described in the embodiment described above and includes a configuration in which a part of the configurations is deleted.

For example, in the present embodiment, the case in which the detection unit having the electrochemical flow cell including the plurality of electrodes is used as the air detection section is described as an example, but the invention is not limited thereto, and for example, a light sensor (optical sensor) including a light emitting unit and a light receiving unit may be used as the air detection section, and the inflow of air into the nozzle may be detected based on the amount of light emitted from the light emitting unit and detected by the light receiving unit, or a pressure sensor that detects the pressure in the nozzle may be used as the air detection section, and the inflow of air into the nozzle may be detected based on the pressure in the nozzle.

Further, not limited to the detection step, and the invention can be applied to any step as long as it is a step of aspirating a liquid whose amount is defined in advance and a section for detecting inflow of air is provided in the aspiration flow path. For example, since the reagent to react with the sample is filled in a specified amount in a reagent bottle by a manufacturing facility at the time of reagent manufacturing, it is possible to detect the deficiency and excess of the reagent liquid amount by appropriately controlling the height of the aspiration nozzle at the time of reagent aspiration from the reagent bottle as in the example of reaction liquid aspiration.

Some or all of the configurations, functions, and the like described above may be implemented by, for example, designing with an integrated circuit. In addition, the configurations, functions, and the like described above may be implemented by software by a processor interpreting and executing a program for implementing each function.

### Reference Signs List

100: automatic analyzer
101: analysis unit
102: sample disk
103: sample container
104: sample dispensing mechanism
105: reagent storage
106: reagent disk
107: reagent container holding unit
108: reagent dispensing mechanism
110: incubator disk
111: reagent discharging position
112: magnetic particle mixing arm
113: reaction container disposal port
114: incubator block
115: reaction liquid stirring mechanism
116: reaction container tray
117: first reaction container transportation mechanism
118: sample discharging position
119: second reaction container transportation mechanism
120: immunity detection mechanism
121: reaction liquid aspirating position
125: control unit
201: reaction liquid
202: detection unit
203: syringe
204: waste-liquid unit
205: nozzle
206: vertical drive mechanism
207: recording unit
401: reaction container
501: air
601: electrode
701: air segment

## Claims

1. An automatic analyzer, comprising:
a nozzle that is immersed in a liquid stored in a container and that aspirates the liquid;
a detection unit that detects inflow of the air into the nozzle when aspirating liquid stored in the container: and
a control unit that controls each operation of insertion of the nozzle into the container, immersion of the nozzle into the liquid, aspiration of the liquid by the nozzle, and detection of the air by the detection unit, wherein
the control unit inserts the nozzle into the container to a position where a distal end of the nozzle is exposed from the liquid when the nozzle is immersed in the liquid of the container and aspirates the liquid of an amount required for an analysis.

2. The automatic analyzer according to claim 1, wherein
the control unit determines that an amount of the liquid in the container is deficient when inflow of the air into the nozzle is detected at a timing before the nozzle is immersed in the liquid of the container and aspirates the liquid of an amount required for an analysis.

3. The automatic analyzer according to claim 1, wherein
the control unit determines that the liquid amount in the container is in excess when the nozzle is immersed in the liquid of the container and aspirates the liquid of an amount required for an analysis, thereafter the nozzle is raised by a predetermined height and executes an aspirating operation, and the detection unit does not detect inflow of the air into the nozzle.

4. The automatic analyzer according to claim 1, wherein
the detection unit is a flow cell including a plurality of electrodes, and detects inflow of the air into the nozzle based on an electric potential difference between the plurality of electrodes.

5. The automatic analyzer according to claim 1, wherein
the detection unit is an optical sensor including a light emitting unit and a light receiving unit, and detects inflow of the air into the nozzle, based on light intensity emitted from the light emitting unit and detected by the light receiving unit.

6. The automatic analyzer according to claim 1, wherein
the detection unit is a pressure sensor detecting pressure within the nozzle, and detects inflow of the air into the nozzle based on the pressure within the nozzle.
